# EUROPEAN PATENT SPECIFICATION

(11) **EP 3 399 669 B1**
(45) Date of publication and mention of the grant of the patent: **25.12.2019**
(21) Application number: 17169692.5
(22) Date of filing: 05.05.2017
(51) Int. Cl.: H04B 10/071

(54) **AN OTDR TEST SYSTEM AND OTDR TEST METHOD FOR A TWDM PON**
OTDR-TESTSYSTEM UND OTDR-TESTVERFAHREN FÜR EIN TWDM-PON
SYSTÈME DE TEST OTDR ET PROCÉDÉ DE TEST OTDR POUR UN TWDM PON

(43) Date of publication of application: 07.11.2018
(73) Proprietor: Nokia Solutions and Networks Oy, 02610 Espoo (FI)
(72) Inventor: Struyve, Kris, 2018 Antwerpen (BE)
(74) Representative: IP HILLS NV

(56) References cited:
- EP-A1- 2 337 240
- WO-A1-2009/006837
- K.W. LIM ET AL: "Fault localization in WDM passive optical network by reusing downstream light sources", IEEE PHOTONICS TECHNOLOGY LETTERS., vol. 17, no. 12, 1 December 2005 (2005-12-01), pages 2691-2693, XP055137840, US ISSN: 1041-1135, DOI: 10.1109/LPT.2005.859178

## Description

### Technical Field

The present invention concerns optical fiber access networks, more particularly time wavelength division multiplexing passive optical networks, abbreviated TWDM PONs, optionally co-existing with other next generation PON flavours such as for instance Gigabit-capable Passive Optical Networks, abbreviated GPONs, 10 Gigabit-capable Passive Optical Networks, abbreviated XG-PONs, 10 Gigabit-capable Symmetrical Passive Optical Networks, abbreviated XGS-PON, etc. The invention generally relates to remote detection and localization of physical fiber impairments in such a TWDM PON while it is in operational use by a service provider.

### Background

TWDM PON is the most advanced and sophisticated of all next generation passive optical network (NG-PON) technologies. TWDM PON adds more wavelengths on the optical fiber: initially 4 wavelengths in downstream direction and 4 wavelengths in upstream direction, with more wavelengths possible in the future. TWDM PON supports flexible bitrate configurations in downstream / upstream direction, like for instance 2.5 Gbps / 2.5 Gbps, 10 Gbps / 2.5 Gbps, and 10 Gbps / 10 Gbps, and uses tunable lasers that allow network operators to dynamically assign and change the wavelength whereon the customer is connected. The optical line termination, abbreviated OLT, in such a TWDM PON is equipped with multiple transceivers. Each transceiver comprises a laser transmitter able to generate and transmit the downstream signals for one particular TWDM channel. The laser is designed and configured to transmit at the corresponding downstream wavelength of that particular TWDM channel. The receiver that forms part of the same transceiver is designed and configured to receive upstream signals at the corresponding upstream wavelength of that particular TWDM channel. At the optical network termination, abbreviated ONT, the TWDM channel may be selected or tuned dynamically, or the TWDM channel may be statically preconfigured or limited by design to support only one channel.

The best existing solution for detection and localization of physical fiber impairments in a TWDM PON is an Optical Time Domain Reflectometry test system, abbreviated an OTDR system, with a headend deployed in the Central Office (CO) of the TWDM PON and optional high reflective devices close to or at the customer premises equipment (CPE) or key demarcation point.

Document "Fault localization in WDM passive optical network by reusing downstream light sources, K.W. LIM ET AL" discloses a method to detect and localize fiber failures in a WDM PON by using a fault localizer. The fault localizer comprises a control unit, a pulse generator, a tunable bandpass filter and an OTDR receiver. The control unit monitors the status of the upstream signals in order to detect fiber failures. When a fiber failure occurs the control unit starts a test by connecting the transmitter to the pulse generator. The transmitter modulates the downstream light source with an OTDR pulse, thus reusing the downstream laser to transmit OTDR pulses instead of data.

The drawbacks of such existing OTDR systems are threefold. Firstly, such existing OTDR system requires a dedicated headend with transceiver, additional couplers and an optical switch to insert the OTDR test signal in the TWDM PON under test. The required dedicated hardware represents a deployment cost. Secondly, such existing OTDR system brings deployment challenges as the couplers that form part of such OTDR system must be inserted before activating the TWDM PON. Inserting the couplers in an operational TWDM PON would affect the service. Thirdly, existing OTDR systems typically use a reserved, dedicated wavelength for testing the PON. The test wavelength differs from the wavelengths that are used by the PON. As a consequence, existing OTDR systems do not test a TWDM PON at wavelengths used for regular data communication in the TWDM PON. The existing OTDR system therefore may fail to detect impairments that affect the regular service and/or may report impairments that are not affecting the regular service.

### Summary

It is an objective of the present invention to provide an OTDR test system for TWDM PONs that resolves one or several of the above identified shortcomings of existing solutions. More particularly, it is an objective of the present invention to disclose an OTDR test system for TWDM PONs with reduced deployment cost and/or reduced deployment challenges, which is faster and/or offers improved accuracy in the detection of service affecting physical fiber impairments.

Embodiments of the invention defined by claim 1 concern an optical time domain reflectometry test system, abbreviated OTDR test system, adapted to detect a physical impairment in a time wavelength division multiplexing passive optical network, abbreviated TWDM PON, the TWDM PON being in operational use by a service provider, the OTDR test system comprising a processor configured to:
- assess the status of the TWDM PON;
- select a test channel amongst the available TWDM channels for an OTDR test through an optimization criterion considering the status of the TWDM PON and minimizing impact of the OTDR test for one or more users;
- move optical network terminations, abbreviated ONTs, that are using the test channel to one or more TWDM channel different from the test channel;
- instruct injection of an OTDR test signal by the respective laser in the optical line termination, abbreviated OLT, into the test channel;
- capture reflections of the OTDR test signal at the OLT;
- move the ONTs back to the test channel or to a more optimal channel configuration; and
- process the reflections of the OTDR test signal to detect the physical impairment.

Thus, embodiments of the invention concern an embedded OTDR test system that performs an OTDR test on a selected TWDM channel that is carefully selected amongst the available TWDM channels in a TWDM PON according to an optimization criterion. The hardware that is used to transmit optical signals during normal operation, and that consequently is available in the OLT, is also used to generate and transmit the OTDR test signal. The available lasers in the OLT transceivers in other words are re-used and the OLT transceivers further are equipped with OTDR signal receivers adapted to receive the reflections of the OTDR test signal. The embedded OTDR test system according to the present invention in other words requires no dedicated test equipment hardware like transceivers, couplers, etc. to be deployed in order to be able to carry out the test. During the OTDR test, ONTs that are using the selected TWDM channel for regular data communications are temporarily moved to alternate TWDM channels. This way service interruption is avoided whilst the test signal uses an in-service wavelength. No external headend, optical switch or couplers are required hence reducing the total cost of testing the TWDM PON for physical impairments for the operator. The OTDR test signal uses an in-service wavelength and achieves a higher Signal-to-Noise Ratio (SNR), as a result of which a faster and more accurate analysis is expected. Since no optical switch is required, round-robin limitations are absent and multiple PONs can be tested in parallel.

In embodiments of the OTDR test system according to the present invention, defined by claim 2, the processor is further configured to:
- instruct one or more ONT in the TWDM PON to activate a reflector on the wavelength of the test channel.

Enabling a higher reflection on the selected TWDM channel in the ONTs that are typically located at the customer premises or at a different demarcation point brings the additional advantage that the reflection by the ONT is made better visible, hence enabling the OTDR test system to better determine the farthest location up to which there is optical connectivity.

In embodiments of the OTDR test system according to the present invention, defined by claim 3, the status of the TWDM PON comprises one or more of:
- reachability of ONTs in the TWDM PON;
- channel currently used by ONTs in the TWDM PON;
- channels supported by ONTs in the TWDM PON;
- static or dynamic channel configuration of ONTs in the TWDM PON;
- performance of ONTs in the TWDM PON; and
- bandwidth utilization of ONTs in the TWDM PON.

Indeed, in order to be able to select the optimal TWDM channel for the OTDR test, i.e. the test channel that minimizes impact of the test for one or more users depending on the applied optimization criterion, the OTDR test system assesses the PON status at the start of a planned or on-demand OTDR test. This assessment may involve determining which ONTs are reachable and which ONTs are not reachable. Non-reachable ONTs anyway do not enjoy any current service, e.g. because of a broken fiber, and therefore cannot be further impacted by the OTDR test. The status assessment also may involve determining which TWDM channels are currently used by the different ONTs. Selecting a TWDM channel that is used by a smaller number or no ONTs for the OTDR test will have a smaller impact on service and channel reassignment than selection of a TWDM channel that is currently used by a high number of ONTs. The status assessment also may involve determining which TWDM channels are supported by the different ONTs. If certain ONTs support only one channel, selection of this channel for the OTDR test will inevitably interrupt the service for such ONTs during the OTDR test. The status assessment further may involve determining if the channels currently in use are dynamically configured or statically configured in the different ONTs. If an ONT is currently using a statically configured channel and that ONT is reachable, the channel used by that ONT may not be a good candidate for the OTDR test because such ONT cannot be reconfigured to temporarily use a different channel. The TWDM PON status assessment further may involve analysing the performance of ONTs in the TWDM PON and/or analysing the bandwidth utilization of ONTs in the TWDM PON. The TDWM channels that are in use by ONTs that are poorly performing or by ONTs that utilize little bandwidth may be good candidates to become selected as OTDR test channel because moving such ONTs performing poorly and/or utilizing little bandwidth temporarily to other TWDM channels has little impact on the services or even may improve the service quality.

In embodiments of the OTDR test system according to the invention, defined by claim 4, the optimization criterion to select the test channel comprises one or more of:
- channel with least actual traffic;
- channel with least historical traffic;
- channel with least amount of connected ONTs;
- channel currently not used by a static configured ONT;
- channel with minimal violation of subscriber service level agreements with high profile users.

Indeed, the OTDR system must select the best channel or optimal channel to use for the OTDR test and thereto applies an optimization criterion. The OTDR test channel may be selected such that the impact resulting from moving the ONTs that use the selected test channel temporarily to different channels is minimized. Consequently, selecting the TWDM channel carrying the least actual traffic and/or historical traffic amongst all channels might be considered. Alternative embodiments of the OTDR system according to the invention may select the channel with least number of connected ONTs, i.e. the channel amongst all TWDM channels that is currently used by the lowest amount of ONTs, such that the number of ONTs that must be moved temporarily to other TWDM channels is minimized. Other embodiments of the OTDR test system according to the invention may avoid selecting a channel that is statically preconfigured within one or several ONTs. Such ONT cannot be moved to a different channel during the OTDR test as a consequence of which its service must be interrupted when its channel would be selected for the test. Further alternative embodiments may consider service level agreement requirements or SLA requirements and select the OTDR channel attempting to avoid or minimize SLA violations. For instance, selection of a channel that is currently used by one or more business client or VIP client may be avoided and preference may be given to selection of a TWDM channel that is only used by residential clients. The skilled person will appreciate that combinations of the above criteria may result in further alternative embodiments. The skilled person also will appreciate that the example criteria described here above are non-exhaustive and variant embodiments of the OTDR test system according to the invention using alternative optimization criteria in the test channel selection may be contemplated.

In embodiments of the OTDR test system according to the invention, defined by claim 5, the processor is configured to move the ONTs from the test channel to one or more TWDM channel different from the test channel through wavelength tuning.

Indeed, the OTDR test system may rely on the availability of wavelength tuners in ONTs that support multiple TWDM channels to dynamically re-tune the transceivers, i.e. move ONTs that are using the selected OTDR test channel to different channels. It is further noticed that moving one or more of the ONTs to alternative channels may possibly involve dynamic bandwidth re-allocations.

In embodiments of the OTDR test system according to the present invention, defined by claim 6, the processor is configured to process the reflections of the OTDR test signal to locate the physical impairment.

Indeed, advantageously, the OTDR system detects the physical impairment on a fiber in the PON and in addition also localizes this impairment through analysis of the time lapsed in between transmission of the OTDR test signal and receipt of the reflection of the OTDR test signal. Through analysis of the attenuation, the processor may even obtain information on the nature of the impairment, e.g. fiber loss, adjacent channel crosstalk, polarization mode dispersion, self phase modulation, cross phase modulation, stimulated Brillouin scattering, etc.

An embodiment of the OTDR test system according to the present invention, defined by claim 7, further comprises in the OLT:
- an OTDR receiver configured to receive the reflections of the OTDR test signal on the wavelength of the test channel; and
- a 10 % tap coupler, located between the OTDR receiver and a downstream/upstream channel wavelength multiplexer, and adapted to couple 10 % of the reflections of the OTDR test signal on the wavelength of the test channel into the OTDR receiver.

This embodiment of the embedded OTDR test system according to the present invention in other words comprises a processor running an OTDR management application, and a dedicated OTDR receiver as well as a 10 % tap coupler in each transceiver in the OLT. The OTDR receiver is designed and configured to receive reflections of the downstream transmitted signals, i.e. upstream signals at the same wavelength as the one used by the corresponding laser transmitter that forms part of the same transceiver. Since the transmitter is used to downstream transmit the OTDR test signal, the dedicated OTDR receiver will receive reflections of the OTDR test signal during the OTDR test. A downstream/upstream channel wavelength multiplexer typically multiplexes the downstream channel and upstream channel on a single fiber in downstream direction, and demultiplexes the upstream channel and downstream channel in upstream direction. In the fiber between the data transmitter and this downstream/upstream channel wavelength multiplexer, this embodiment of the invention foresees an additional element to couple a portion of the signal at the wavelength used by the data transmitter into the dedicated OTDR receiver. A 10 % tap coupler may be used for instance to tap 10 % of the upstream power at the wavelength used for downstream transmission into the OTDR receiver, enabling the OTDR receiver to analyse the reflections or to forward the reflections to the processor running the OTDR management application for analysis, with limited attenuation of the downstream signal.

Another embodiment of the OTDR test system according to the present invention, defined by claim 8, further comprises in the OLT:
- an OTDR receiver configured to receive the reflections of the OTDR test signal on the wavelength of the test channel;
- a coupler adapted to redirect a portion of the upstream signals; and
- a wavelength demultiplexer, located between the OTDR receiver and the coupler, and adapted to demultiplex the upstream signal at the regular upstream wavelength and the upstream signal at the test wavelength of the test channel, and adapted to couple the latter into the OTDR receiver.

This embodiment of the embedded OTDR test system according to the present invention in other words comprises a processor running an OTDR management application, and a dedicated OTDR receiver as well as a coupler and additional wavelength demultiplexer in each transceiver in the OLT. The OTDR receiver is designed and configured to receive reflections of the downstream transmitted signals, i.e. upstream signals at the same wavelength as the one used by the corresponding laser transmitter that forms part of the same transceiver. Since the transmitter is used to downstream transmit the OTDR test signal, the dedicated OTDR receiver will receive reflections of the OTDR test signal during the OTDR test. The coupler redirects half of the upstream power to the regular data receiver and the dedicated OTDR receiver. A wavelength demultiplexer further demultiplexes the regular upstream channel, coupled into the data receiver, from the upstream reflections of the OTDR signal, coupled into the dedicated OTDR receiver. Although the coupler brings extra attenuation in the upstream signal, i.e. only 50 % of the upstream power will be coupled into the regular data receiver, it also brings the advantage that the attenuation of the downstream signal is reduced in comparison with the previous embodiment relying on a 10 % tap coupler.

Yet another embodiment of the OTDR test system according to the present invention, defined by claim 9, further comprises in the OLT:
- an OTDR receiver configured to receive the reflections of the OTDR test signal on the wavelength of the test channel; and
- a fast optical switch adapted to switch at millisecond speed between a first position wherein a burst of the OTDR test signal is passed in downstream direction into the TWDM PON and a second position wherein reflections of the burst of the OTDR test signal are coupled into the OTDR receiver.

This embodiment of the embedded OTDR test system according to the present invention in other words comprises a processor running an OTDR management application, and a dedicated OTDR receiver as well as a fast optical switch that switches between a first state and a second state at millisecond, microsecond or even nanosecond speed in each transceiver in the OLT. The OTDR receiver is designed and configured to receive reflections of the downstream transmitted signals, i.e. upstream signals at the same wavelength as the one used by the corresponding laser transmitter that forms part of the same transceiver. Since the transmitter is used to downstream transmit the OTDR test signal, the dedicated OTDR receiver will receive reflections of the OTDR test signal during the OTDR test. The fast optical switch is located and configured to pass in its first state the regular data signals in downstream and upstream direction during normal operation. During the OTDR test, the fast optical switch will stay in its first state to pass an OTDR test signal burst transmitted by the laser transmitter, and will then switch as quickly as possible to its second state wherein the upstream reflections of the OTDR test signal burst are coupled into the dedicated OTDR receiver. This embodiment brings the advantage that upstream and downstream signals experience a very limited attenuation.

Still another embodiment of the OTDR test system according to the present invention, defined by claim 10, further comprises in the OLT:
- an OTDR receiver configured to receive the reflections of the OTDR test signal on the wavelength of the test channel;
- a coupler adapted to redirect a portion of the upstream signals; and
- slow optical switches located and adapted to switch between a first position wherein data signals are bypassing the coupler during normal operation and a second position wherein the OTDR test signal is passed through the coupler in downstream direction and the OTDR receiver is coupled to the coupler to receive reflections of the OTDR test signal during the test.

This embodiment of the embedded OTDR test system according to the present invention in other words comprises a processor running an OTDR management application, and a dedicated OTDR receiver as well as a coupler and slow optical switches in each transceiver in the OLT. The OTDR receiver is designed and configured to receive reflections of the downstream transmitted signals, i.e. upstream signals at the same wavelength as the one used by the corresponding laser transmitter that forms part of the same transceiver. Since the transmitter is used to downstream transmit the OTDR test signal, the dedicated OTDR receiver will receive reflections of the OTDR test signal during the OTDR test. The optical switches are located before and after the coupler, and configured to switch between a first state corresponding to normal operation and a second state corresponding to the OTDR test. In their first state, the downstream transmitted signal bypasses the coupler, travelling via the optical switches directly towards the ONTs. In the OTDR test mode, the switches are brought into their second state. This operation does not need to be performed fastly. In their second state, the switches couple the downstream transmitted OTDR test signal into the coupler. In the upstream direction, the switches couple the reflections of the OTDR test signal into the coupler. The coupler performs a similar function as described in the embodiment here above, i.e. 50 % of the upstream power is coupled into the OTDR receiver. Thanks to the switches, the coupler no longer brings extra attenuation in the upstream signal during normal operation.

According to a further aspect defined by claim 11, embodiments of the present invention concern an optical time domain reflectometry test method, abbreviated OTDR test method, detecting a physical impairment in a time wavelength division multiplexing passive optical network, abbreviated TWDM PON, the TWDM PON being in operational use by a service provider, the OTDR test method comprising:
- assessing the status of the TWDM PON;
- selecting a test channel amongst the available TWDM channels for an OTDR test through an optimization criterion considering the status of the TWDM PON and minimizing impact of the OTDR test for one or more users;
- moving optical network terminations, abbreviated ONTs, that are using the test channel to one or more TWDM channel different from the test channel;
- instructing injection of an OTDR test signal by the respective laser in the optical line termination, abbreviated OLT, into the test channel;
- capturing reflections of the OTDR test signal at the OLT;
- moving the ONTs back to the test channel or to a more optimal channel configuration; and
- processing the reflections of the OTDR test signal to detect the physical impairment.

### Brief Description of the Drawings

Fig. 1 illustrates a first embodiment of the OTDR test system according to the present invention;
Fig. 2 illustrates a second embodiment of the OTDR test system according to the present invention;
Fig. 3 illustrates a third embodiment of the OTDR test system according to the present invention; and
Fig. 4 illustrates a fourth embodiment of the OTDR test system according to the present invention.

### Detailed Description of Embodiment(s)

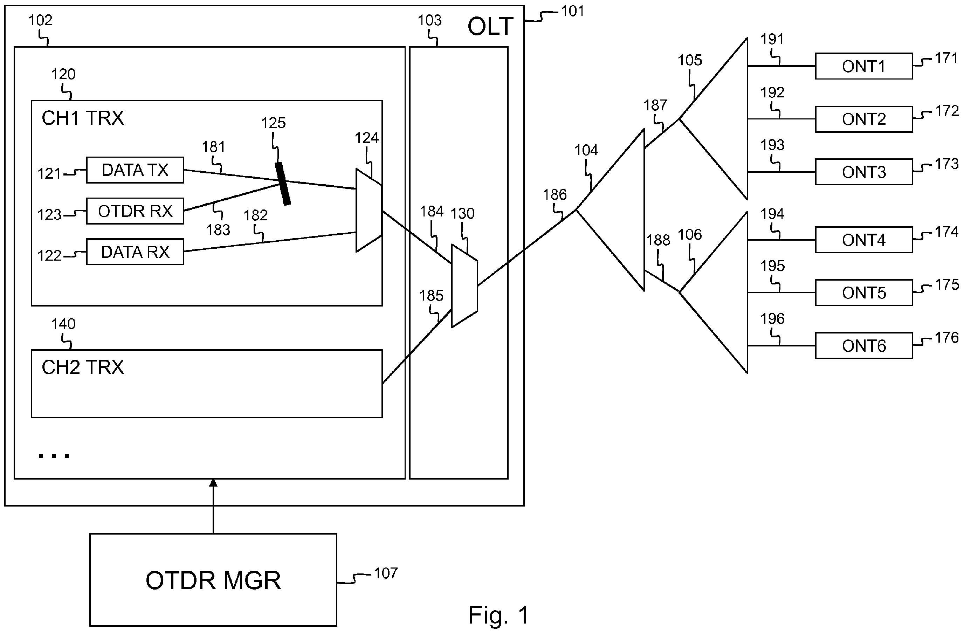

Fig. 1 shows a TWDM PON comprising an optical line termination, OLT or 101, at the central office. The OLT 101 comprises a first cabinet or rack 102 holding the transceivers for a plurality of TWDM channels supported by the OLT 101. In Fig. 1, the transceiver for the first channel, CH1 TRX or 120 is drawn in detail. A similar transceiver for a second channel, CH2 TRX or 140, is also shown. Further transceivers are not shown in Fig. 1 but the skilled person will appreciate that the OLT 101 comprises as many transceivers as the number of TWDM channels supported by the OLT 101. Each transceiver 120, 140, ... comprises a data transmitter like 121, i.e. a laser transmitter designed and configured to transmit data at the downstream wavelength of the respective TWDM channel, e.g. 1596 nm for CH1, and a data receiver like 122, i.e. an optical receiver designed and configured to receive data at the upstream wavelength of the respective TWDM channel, e.g. 1532 nm for CH1. Each transceiver 120, 140, ... further comprises specific OTDR hardware 124, 125 and optical fibers 181, 182, 183 coupling this hardware that will be described in further detail below. The OLT 101 further comprises a second cabinet 103 hosting the TWDM channel multiplexer 130 that multiplexes the data signals received from the different transceivers 120, 140, ... via respective optical fibers 184, 185, ... onto a single optical fiber 186. Fig. 1 further shows a number of optical splitters that typically form part of a PON: primary splitter 104 for instance splits the optical signals received via optical fiber 186 into optical signals destined for the optical network terminations ONT1-ONT3 and optical signals destined for the optical network terminations ONT4-ONT6. The optical signals destined for ONT1-ONT3 are coupled into optical fiber 187 whereas the optical signals destined for ONT4-ONT6 are coupled into optical fiber 188. At the end of optical fiber 187, an optical splitter 105 further splits the received optical signal into a signal for ONT1 or 171 and couples this optical signal into optical fiber 191, a signal for ONT2 or 172 and couples this optical signal into optical fiber 192, and a signal for ONT3 or 173 and couples this optical signal into optical fiber 193. Similarly, at the end of optical fiber 188, an optical splitter 106 further splits the received optical signal into a signal for ONT4 or 174 and couples this optical signal into optical fiber 194, a signal for ONT5 or 175 and couples this optical signal into optical fiber 195, and a signal for ONT6 or 176 and couples this optical signal into optical fiber 196. In the upstream direction, the optical splitters 105, 106 and 104 combine the upstream signals received from the respective ONTs 171-176 onto a single fiber 186 and the TWDM channel multiplexer 130 at the central office demultiplexes the upstream signals in order to couple each of them into the appropriate channel transceiver 120, 140, ...

Fig. 1 further shows an optical time domain reflectometry manager OTDR MGR 107, i.e. a processor configured with an OTDR management application that controls and manages the identification and localisation of physical fiber impairments through OTDR tests on the TWDM PON using embedded technology, i.e. hardware that is integrated in the OLT 101.

At the start of such an on-demand OTDR test or planned OTDR test, the OTDR manager 107 assesses the status of the TWDM PON. The OTDR manager 107 connects with the OLT 101 via the Simple Network Management Protocol (SNMP) to collect information on the reachability, channels currently used, channels supported, performance, current and historic bandwidth utilization of the ONTs 171-176. The OLT 101 is supposed to be knowledgeable on the status of the ONTs 171-176 as it regularly polls these ONTs 171-176 for an update of their Physical Layer Operation And Maintenance (PLOAM) status and Received Signal Strength Indicator (RSSI) parameters. OLT 101 in other words is able to provide the requested status information to the OTDR manager 107. The OTDR manager 107 thereupon runs an algorithm to determine the optimal TWDM channel to be used for the OTDR test. In selecting the OTDR test channel, the OTDR manager 107 strives at minimizing the service impact for the ONTs 171-176. In different variants of the first embodiment the optimization criterion can be a minimization of the number of connected ONTs using the OTDR test channel, a minimization of the amount of traffic currently or historically conveyed over the OTDR test channel, a minimization of the impact on VIP or business subscribers with specific SLAs, etc. In Fig. 1, it is assumed that the first channel CH1 is selected as OTDR test channel. Next, the OTDR manager 107 moves the ONTs that are currently using the selected TWDM channel CH1 dynamically (but temporarily) via wavelength tuning onto the other TWDM channel(s). This re-assignment of channels may possibly involve dynamic bandwidth re-allocations. If it is assumed for instance in Fig. 1 that ONTs 171 and 175 are using the first TWDM channel CH1, ONTs 172, 173 and 174 are using the second TWDM channel CH2, and ONT 176 is using a third TWDM channel CH3, the selection of CH1 as OTDR test channel, may require to move ONT 171 to the third channel CH3 and ONT 175 to the second channel CH2, assuming that these ONTs 171 and 175 respectively support the third channel CH3 and second channel CH2, assuming that these ONTs 171 and 175 are not statically configured but can dynamically be tuned onto different channels, and assuming that the new channels CH3 and CH2 have sufficient capacity available to respectively convey also the current traffic of ONT 171 and ONT 175. When the selected OTDR test channel CH1 is free of any ONTs, the corresponding channel laser 121 is instructed by the OTDR manager 107 to transmit an OTDR test signal, either bursty or continuous, into the PON. The OTDR test signal consequently will be transmitted at the downstream wavelength of 1596 nm of the first TWDM channel CH1. The receiver of that same channel transceiver CH1 TRX captures the backscattering and reflections of the OTDR test signal, and forwards the received OTDR test signal reflections to an OTDR processing unit, located either in the OLT 101 or in the OTDR manager 107. Since the wavelength of the OTDR test signal and its reflections are the same, i.e. the downstream data wavelength of 1596 nm of the corresponding channel CH1, a dedicated OTDR receiver 123 must be provided in the channel transceiver CH1 TRX as the data receiver 122 that is used in normal operation for upstream data reception is designed and configured to receive signals at a different wavelength, namely the upstream wavelength of 1532 nm of CH1. The received OTDR test signal reflections are analysed using state of the art OTDR algorithms to detect and locate physical fiber impairments in the PON responsible for the attenuations and reflections. After the OTDR test, the ONTs 171 and 175 are moved back to their original TWDM channel, i.e. CH1, or are more optimally distributed across other TWDM channels, and the data transmitter 121 and data receiver 122 in the OLT channel transceiver 120 of the selected OTDR test channel resume normal operation, respectively on 1596 nm and 1532 nm.

In order to enable the OTDR receiver 123 to capture the reflections at 1596 nm during the OTDR test, the OLT channel transceiver 120 has a wavelength division multiplexer/demultiplexer 124 to filter the 1596 nm from the 1532 nm wavelengths. The upstream OTDR receive signal on 1596 nm is coupled into the dedicated OTDR receiver 123 via a 10% tap coupler 125 and fiber 183. The upstream data signal on 1532 nm received during normal operation is coupled into data receiver 122 via fiber 182. The wavelength division multiplexer/demultiplexer 124 in other words directly isolates the upstream data at 1532 nm from the signal at 1596 nm. The 10% tap coupler 125 is used on optical fiber 181 in between data transmitter 121 and the wavelength division multiplexer/demultiplexer 124 to tap a portion of the upstream power at 1596 nm towards the OTDR receiver 123.

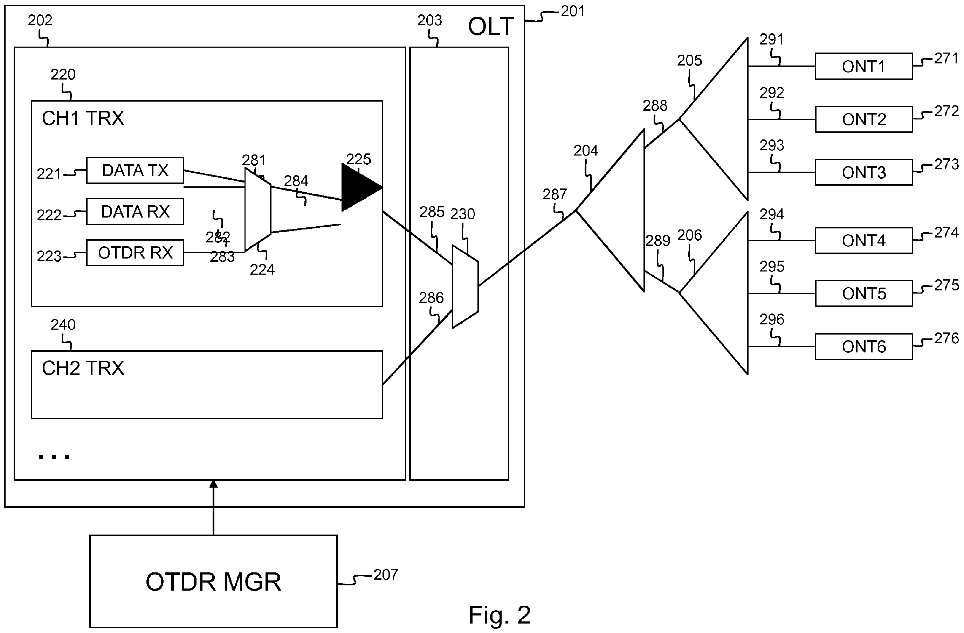

Fig. 2 shows an alternative embodiment wherein the OLT 201, first cabinet 202, second cabinet 203, channel transceivers 220, 240, ..., data transmitter 221, data receiver 222, OTDR receiver 223, channel multiplexer 230, primary splitter 204, splitters 205 and 206, ONTs 271-276, OTDR manager 207, and the optical fibers 285-289 and 291-296 perform similar functions and therefore may be assumed identical to the OLT 101, first cabinet 102, second cabinet 103, channel transceivers 120, 140, ..., data transmitter 121, data receiver 122, OTDR receiver 123, channel multiplexer 130, primary splitter 104, splitters 105 and 106, ONTs 171-176, OTDR manager 107, and the optical fibers 184-188 and 191-196 of the embodiment illustrated by Fig. 1.

In order to enable the OTDR receiver 223 to capture the reflections at 1596 nm during the OTDR test, the OLT channel transceiver 220 has a wavelength division multiplexer/demultiplexer 224 and an optical coupler 225. The coupler 225 redirects half of the upstream power to the data and OTDR receivers 222 and 223 via fiber 284. The wavelength division multiplexer/demultiplexer 224 demultiplexes the upstream data signal at 1532 nm from the upstream reflections of the OTDR test signal at 1596 nm, couples the data signal at 1532 nm via optical fiber 282 to the data receiver 222 and couples the OTDR test signal reflections at 1596 nm via optical fiber 283 to OTDR receiver 223. The coupler 225 inevitably inserts extra attenuation in the upstream data signal during normal operation. In the downstream direction, the coupler 225 passes the downstream transmitted signal received from data transmitter 221 via optical fiber 281 onto the optical fiber 285 towards channel multiplexer 230.

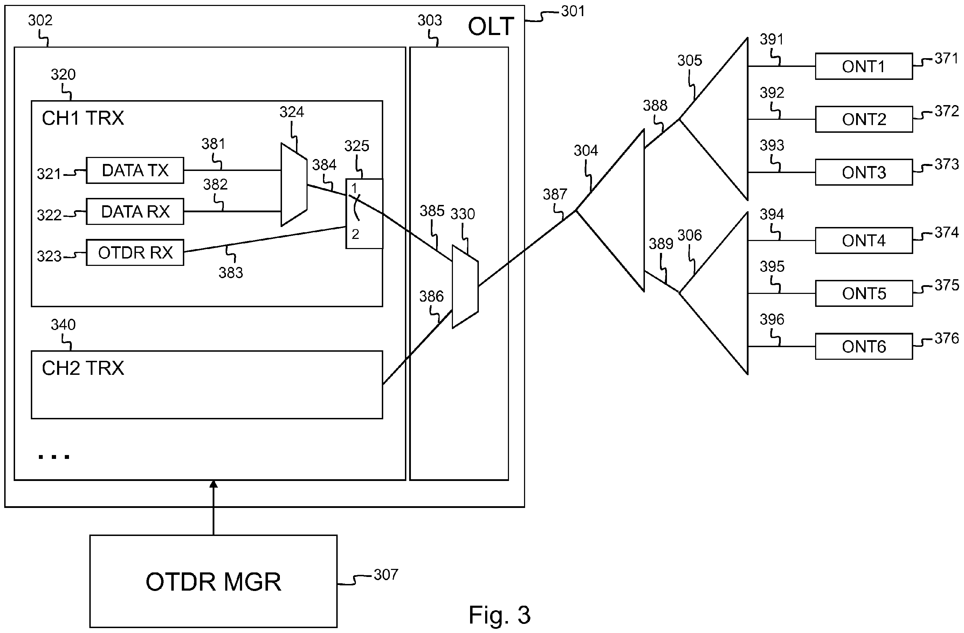

Fig. 3 shows an alternative embodiment wherein the OLT 301, first cabinet 302, second cabinet 303, channel transceivers 320, 340, ..., data transmitter 321, data receiver 322, OTDR receiver 323, channel multiplexer 330, primary splitter 304, splitters 305 and 306, ONTs 371-376, OTDR manager 307, and the optical fibers 385-389 and 391-396 perform similar functions and therefore may be assumed identical to the OLT 101, first cabinet 102, second cabinet 103, channel transceivers 120, 140, ..., data transmitter 121, data receiver 122, OTDR receiver 123, channel multiplexer 130, primary splitter 104, splitters 105 and 106, ONTs 171-176, OTDR manager 107, and the optical fibers 184-188 and 191-196 of the embodiment illustrated by Fig. 1.

In order to enable the OTDR receiver 323 to capture the reflections at 1596 nm during the OTDR test, the OLT channel transceiver 320 has a wavelength division multiplexer/demultiplexer 324 and a fast, optical switch 325. During normal operation, the fast, optical switch 325 in its first state (illustrated by Fig. 3) passes through the downstream data signal at 1596 nm received from data transmitter 321 via optical fiber 381, upstream/downstream multiplexer/demultiplexer 324 and optical fiber 384 onto optical fiber 385 towards the channel multiplexer 330. The fast, optical switch 325, in its first state during normal operation, also passes through the upstream data signal at 1532 nm received from fiber 385 to the data receiver 322 via optical fiber 384, upstream/downstream multiplexer/demultiplexer 324 and optical fiber 382. During OTDR test operation, the data transmitter 321 acts as OTDR test signal transmitter and transmits an OTDR test signal burst downstream on the downstream data wavelength of 1596 nm. As soon as the burst is transmitted, the fast, optical switch 325 is moved as quickly as possible from its first state (illustrated by Fig. 3) to its second state wherein it is coupled to the OTDR receiver 323 via optical fiber 383 to enable the OTDR receiver 323 to capture the backscattering and reflections of the OTDR test signal burst. The fast, optical switch 325 must be able to switch between the first and second state at millisecond, microsecond or even nanosecond speed.

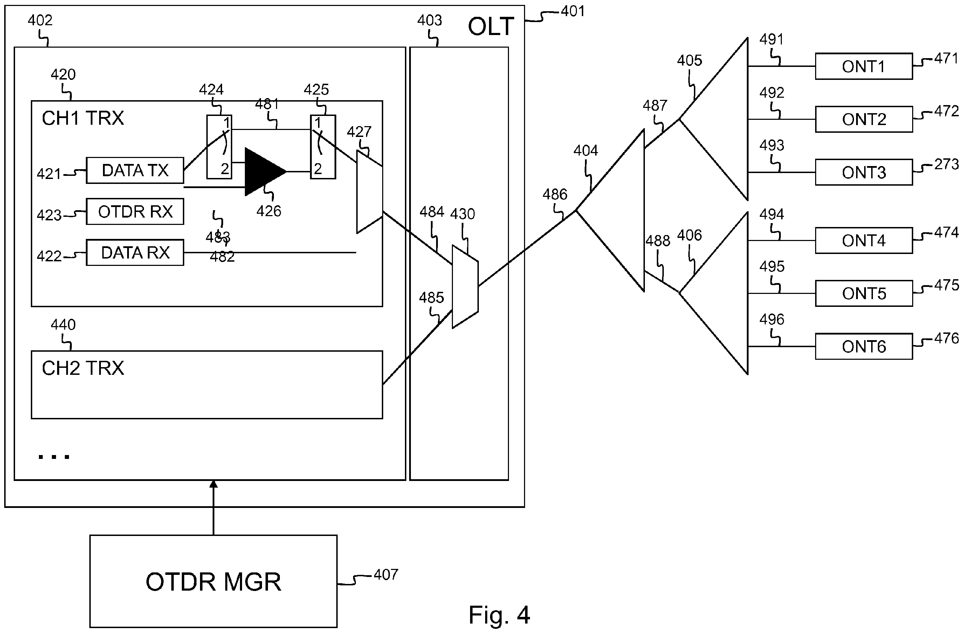

Fig. 4 shows an alternative embodiment wherein the OLT 401, first cabinet 402, second cabinet 403, channel transceivers 420, 440, ..., data transmitter 421, data receiver 422, OTDR receiver 423, channel multiplexer 430, primary splitter 404, splitters 405 and 406, ONTs 471-476, OTDR manager 407, and the optical fibers 484-488 and 491-496 perform similar functions and therefore may be assumed identical to the OLT 101, first cabinet 102, second cabinet 103, channel transceivers 120, 140, ..., data transmitter 121, data receiver 122, OTDR receiver 123, channel multiplexer 130, primary splitter 104, splitters 105 and 106, ONTs 171-176, OTDR manager 107, and the optical fibers 184-188 and 191-196 of the embodiment illustrated by Fig. 1.

In order to enable the OTDR receiver 423 to capture the reflections at 1596 nm during the OTDR test, the OLT channel transceiver 420 has an optical coupler 426, two slow, optical switches 424 and 425, and a wavelength division multiplexer/demultiplexer 427. In this embodiment, less expensive, slow, optical switches 424, 425 are used, as opposed to the more expensive, fast, optical switch 325 in the above embodiment illustrated by Fig. 3. The wavelength division multiplexer/demultiplexer 427 demultiplexes the upstream data signal at 1532 nm from the downstream/upstream 1596 nm signals. During normal operation, the switches 424 and 425 are brought into their first state (illustrated by Fig. 4) wherein the downstream 1596 nm data signal travels via switch 424, optical fiber 481, switch 425, wavelength division multiplexer/demultiplexer 427 and optical fiber 484 towards the channel multiplexer 430. The upstream data signal received from optical fiber 484 is coupled into data receiver 422 via optical fiber 482. During the OTDR test, the optical switches 424 and 425 are brought into their second state. This operation does not need to be fast. Once the switches 424 and 425 are in their new position, the data transmitter 421 starts transmitting a continuous or repetitive bursty OTDR test signal in downstream direction on 1596 nm for a certain time period. This OTDR test signal travels downstream via optical coupler 426, wavelength division multiplexer/demultiplexer 427, and optical fiber 484 towards the channel multiplexer 430. The backscattering and reflections of the OTDR test signal on 1596 nm reach the OTDR receiver 423 via wavelength division multiplexer/demultiplexer 427 and the coupler 426 which couples half of the upstream power into optical fiber 483 towards OTDR receiver 423. As soon as the OTDR test is executed, the optical switches 424 and 425 are again brought to their original state.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An optical time domain reflectometry test system, abbreviated OTDR test system, adapted to detect a physical impairment in a time wavelength division multiplexing passive optical network, abbreviated TWDM PON, said TWDM PON being in operational use by a service provider, said OTDR test system comprising a processor (107; 207; 307; 407) configured to:
- assess the status of said TWDM PON;
- select a test channel amongst the available TWDM channels for an OTDR test through an optimization criterion considering said status of said TWDM PON and minimizing impact of said OTDR test for one or more users;
- move optical network terminations (171, 175; 271, 275; 371, 275; 471, 475), abbreviated ONTs, that are using said test channel to one or more TWDM channel different from said test channel;
- instruct injection of an OTDR test signal by the respective laser (121; 221; 321; 421) in the optical line termination (101; 201; 301; 401), abbreviated OLT, into said test channel;
- capture reflections of said OTDR test signal at said OLT (101; 201; 301; 401);
- move said ONTs (171, 175; 271, 275; 371, 275; 471, 475) back to said test channel or to a more optimal channel configuration; and
- process said reflections of said OTDR test signal to detect said physical impairment.

2. The OTDR test system according to claim 1, wherein said processor (107; 207; 307; 407) is further configured to:
- instruct one or more ONT in said TWDM PON to activate a reflector on the wavelength of said test channel.

3. The OTDR test system according to claim 1, wherein said status of said TWDM PON comprises one or more of:
- reachability of ONTs (171-176; 271-276; 371-376; 471-476) in said TWDM PON;
- channel currently used by ONTs (171-176; 271-276; 371-376; 471-476) in said TWDM PON;
- channels supported by ONTs (171-176; 271-276; 371-376; 471-476) in said TWDM PON;
- static or dynamic channel configuration of ONTs (171-176; 271-276; 371-376; 471-476) in said TWDM PON;
- performance of ONTs (171-176; 271-276; 371-376; 471-476) in said TWDM PON; and
- bandwidth utilization of ONTs (171-176; 271-276; 371-376; 471-476) in said TWDM PON.

4. The OTDR test system according to claim 1, wherein said optimization criterion to select said test channel comprises one or more of:
- channel with least actual traffic;
- channel with least historical traffic;
- channel with least amount of connected ONTs;
- channel currently not used by a static configured ONT;
- channel with minimal violation of subscriber service level agreements with high profile users.

5. The OTDR test system according to claim 1, wherein said processor (107; 207; 307; 407) is configured to move said ONTs (171, 175; 271, 275; 371, 275; 471, 475) back from said test channel to one or more TWDM channel different from said test channel through wavelength tuning.

6. The OTDR test system according to claim 1, wherein said processor (107; 207; 307; 407) is configured to process said reflections of said OTDR test signal to locate said physical impairment.

7. The OTDR test system according to claim 1, further comprising in said OLT (101):
- an OTDR receiver (123) configured to receive said reflections of said OTDR test signal on the wavelength of said test channel; and
- a 10 % tap coupler (125), located between said OTDR receiver (123) and a downstream/upstream channel wavelength multiplexer (124), and adapted to couple 10 % of said reflections of said OTDR test signal on the wavelength of said test channel into said OTDR receiver (123).

8. The OTDR test system according to claim 1, further comprising in said OLT (201):
- an OTDR receiver (223) configured to receive said reflections of said OTDR test signal on the wavelength of said test channel;
- a coupler (225) adapted to redirect a portion of the upstream signals; and
- a wavelength demultiplexer (224), located between said OTDR receiver (223) and said coupler (225), and adapted to demultiplex the upstream signal at the regular upstream wavelength and the upstream signal at the test wavelength of said test channel, and adapted to couple the latter into said OTDR receiver (223).

9. The OTDR test system according to claim 1, further comprising in said OLT (301):
- an OTDR receiver (323) configured to receive said reflections of said OTDR test signal on the wavelength of said test channel; and
- a fast optical switch (325) adapted to switch at millisecond speed between a first position wherein a burst of said OTDR test signal is passed in downstream direction into said TWDM PON and a second position wherein reflections of said burst of said OTDR test signal are coupled into said OTDR receiver (323).

10. The OTDR test system according to claim 1, further comprising in said OLT (401):
- an OTDR receiver (423) configured to receive said reflections of said OTDR test signal on the wavelength of said test channel;
- a coupler (426) adapted to redirect a portion of the upstream signals; and
- slow optical switches (424, 425) located and adapted to switch between a first position wherein data signals are bypassing said coupler (426) during normal operation and a second position wherein said OTDR test signal is passed through said coupler (426) in downstream direction and said OTDR receiver (423) is coupled to said coupler (426) to receive reflections of said OTDR test signal during said test.

11. An optical time domain reflectometry test method, abbreviated OTDR test method, detecting a physical impairment in a time wavelength division multiplexing passive optical network, abbreviated TWDM PON, said TWDM PON being in operational use by a service provider, said OTDR test method comprising:
- assessing the status of said TWDM PON;
- selecting a test channel amongst the available TWDM channels for an OTDR test through an optimization criterion considering said status of said TWDM PON and minimizing impact of said OTDR test for one or more users;
- moving optical network terminations (171, 175, 271, 275; 371, 375; 471, 475), abbreviated ONTs, that are using said test channel to one or more TWDM channel different from said test channel;
- instructing injection of an OTDR test signal by the respective laser (121; 221; 321; 421) in the optical line termination (101; 201; 301; 401), abbreviated OLT, into said test channel;
- capturing reflections of said OTDR test signal at said OLT (101; 201; 301; 401);
- moving said ONTs (171, 175, 271, 275; 371, 375; 471, 475) back to said test channel or to a more optimal channel configuration; and
- processing said reflections of said OTDR test signal to detect said physical impairment.

## Patentansprüche

1. Optisches Zeitbereichsreflektometrie-Testsystem, abgekürzt OTDR-Testsystem, das dazu ausgelegt ist, eine physische Beeinträchtigung in einem Time Wavelength Division Multiplexing Passive Optical Network, abgekürzt TWDM PON, zu erfassen, wobei das TWDM PON in betriebsfähigem Gebrauch durch einen Dienstanbieter ist und das OTDR-Testsystem einen Prozessor (107; 207; 307; 407) umfasst, der für Folgendes ausgelegt ist:
- Bewerten des Status des TWDM PON;
- Auswählen eines Testkanals unter den verfügbaren TWDM-Kanälen für einen OTDR-Test durch ein Optimierungskriterium unter Berücksichtigung des Status des TWDM PON und Minimieren der Auswirkung des OTDR-Tests für ein oder mehrere Benutzer;
- Verschieben von optischen Netzwerkabschlüssen (171, 175; 271, 275; 371, 275; 471, 475), abgekürzt ONTs, die den Testkanal verwenden, zu ein oder mehreren TWDM-Kanälen, die von dem Testkanal verschieden sind;
- Anweisen einer Injektion eines OTDR-Testsignals durch den entsprechenden Laser (121; 221; 321; 421) in dem optischen Leitungsabschluss (101; 201; 301; 401), abgekürzt OLT, in den Testkanal;
- Erfassen von Reflexionen des OTDR-Testsignals an dem OLT (101; 201; 301; 401);
- Verschieben der ONTs (171, 175; 271, 275; 371, 275; 471, 475) zurück zu dem Testkanal oder zu einer optimaleren Kanalkonfiguration; und
- Verarbeiten der Reflexionen des OTDR-Testsignals, um die physische Beeinträchtigung zu erfassen.

2. OTDR-Testsystem gemäß Anspruch 1, wobei der Prozessor (107; 207; 307; 407) ferner für Folgendes ausgelegt ist:
- Anweisen von ein oder mehreren ONTs in dem TWDM PON, einen Reflektor auf der Wellenlänge des Testkanals zu aktivieren.

3. OTDR-Testsystem gemäß Anspruch 1, wobei der Status des TWDM PON ein oder mehrere der folgenden Punkte umfasst:
- Erreichbarkeit von ONTs (171-176; 271-276; 371-376; 471-476) in dem TWDM PON;
- Gegenwärtig durch ONTs (171-176; 271-276; 371-376; 471-476) in dem TWDM PON verwendeter Kanal;
- durch ONTs (171-176; 271-276; 371-376; 471-476) in dem TWDM PON unterstützte Kanäle;
- statische oder dynamische Kanalkonfiguration von ONTs (171-176; 271-276; 371-376; 471-476) in dem TWDM PON;
- Leistung von ONTs (171-176; 271-276; 371-376; 471-476) in dem TWDM PON; und
- Bandbreitennutzung von ONTs (171-176; 271-276; 371-376; 471-476) in dem TWDM PON.

4. OTDR-Testsystem gemäß Anspruch 1, wobei das Optimierungskriterium zum Auswählen des Testkanals ein oder mehrere der folgenden Punkte umfasst:
- Kanal mit dem geringsten tatsächlichen Verkehr;
- Kanal mit dem geringsten historischen Verkehr;
- Kanal mit der kleinsten Menge von verbundenen ONTs;
- Kanal, der gegenwärtig nicht von einem statisch konfigurierten ONT verwendet wird;
- Kanal mit minimaler Verletzung von Teilnehmer-Service-Level-Vereinbarungen mit hochkarätigen Benutzern.

5. OTDR-Testsystem gemäß Anspruch 1, wobei der Prozessor (107; 207; 307; 407) dazu ausgelegt ist, die ONTs (171, 175; 271, 275; 371, 275; 471, 475) von dem Testkanal zu ein oder mehreren TWDM-Kanälen, die von dem Testkanal verschieden sind, durch Wellenlängenabstimmung zurückzuverschieben.

6. OTDR-Testsystem gemäß Anspruch 1, wobei der Prozessor (107; 207; 307; 407) dazu ausgelegt ist, die Reflexionen des OTDR-Testsignals zu verarbeiten, um die physische Beeinträchtigung zu lokalisieren.

7. OTDR-Testsystem gemäß Anspruch 1, das in dem OLT (101) ferner Folgendes umfasst:
- einen OTDR-Empfänger (123), der dazu ausgelegt ist, die Reflexionen des OTDR-Testsignals auf der Wellenlänge des Testkanals zu empfangen; und
- einen 10 % Abzweigkoppler (125), der zwischen dem OTDR-Empfänger (123) und einem Downstream/Upstream-Kanal-Wellenlängen-Multiplexer (124) angeordnet und dazu ausgelegt ist, 10 % der Reflexionen des OTDR-Testsignals auf der Wellenlänge des Testkanals in den OTDR-Empfänger (123) zu koppeln.

8. OTDR-Testsystem gemäß Anspruch 1, das in dem OLT (201) ferner Folgendes umfasst:
- einen OTDR-Empfänger (223), der dazu ausgelegt ist, die Reflexionen des OTDR-Testsignals auf der Wellenlänge des Testkanals zu empfangen;
- einen Koppler (225), der dazu ausgelegt ist, einen Teil der Upstream-Signale umzuleiten; und
- einen Wellenlängen-Demultiplexer (224), der zwischen dem OTDR-Empfänger (223) und dem Koppler (225) angeordnet und dazu ausgelegt ist, das Upstream-Signal bei der regulären Upstream-Wellenlänge und das Upstream-Signal bei der Testwellenlänge des Testkanals zu demultiplexen, und der dazu ausgelegt ist, das letztere in den OTDR-Empfänger (223) zu koppeln.

9. OTDR-Testsystem gemäß Anspruch 1, das in dem OLT (301) ferner Folgendes umfasst:
- einen OTDR-Empfänger (323), der dazu ausgelegt ist, die Reflexionen des OTDR-Testsignals auf der Wellenlänge des Testkanals zu empfangen; und
- einen schnellen optischen Schalter (325), der dazu ausgelegt ist, mit Millisekunden-Geschwindigkeit zwischen einer ersten Position, wobei ein Impuls des OTDR-Testsignals in Stromabwärtsrichtung in das TWDM PON geleitet wird, und einer zweiten Position, wobei Reflexionen des Impulses des OTDR-Testsignals in den OTDR-Empfänger (323) gekoppelt werden, umzuschalten.

10. OTDR-Testsystem gemäß Anspruch 1, das in dem OLT (401) ferner Folgendes umfasst:
- einen OTDR-Empfänger (423), der dazu ausgelegt ist, die Reflexionen des OTDR-Testsignals auf der Wellenlänge des Testkanals zu empfangen;
- einen Koppler (426), der dazu ausgelegt ist, einen Teil der Upstream-Signale umzuleiten; und
- langsame optische Schalter (424, 425), die angeordnet und dazu ausgelegt sind, zwischen einer ersten Position, wobei Datensignale den Koppler (426) während des normalen Betriebs umgehen, und einer zweiten Position, wobei das OTDR-Testsignal in Stromabwärtsrichtung durch den Koppler (426) geleitet wird und der OTDR-Empfänger (423) mit dem Koppler (426) gekoppelt wird, umzuschalten, um Reflexionen des OTDR-Testsignals während des Tests zu empfangen.

11. Optisches Zeitbereichsreflektometrie-Testverfahren, abgekürzt OTDR-Testverfahren, das eine physische Beeinträchtigung in einem Time Wavelength Division Multiplexing Passive Optical Network, abgekürzt TWDM PON, erfasst, wobei das TWDM PON in betriebsfähigem Gebrauch durch einen Dienstanbieter ist und das OTDR-Testverfahren Folgendes umfasst:
- Bewerten des Status des TWDM PON;
- Auswählen eines Testkanals unter den verfügbaren TWDM-Kanälen für einen OTDR-Test durch ein Optimierungskriterium unter Berücksichtigung des Status des TWDM PON und Minimieren der Auswirkung des OTDR-Tests für ein oder mehrere Benutzer;
- Verschieben von optischen Netzwerkabschlüssen (171, 175; 271, 275; 371, 375; 471, 475), abgekürzt ONTs, die den Testkanal verwenden, zu ein oder mehreren TWDM-Kanälen, die von dem Testkanal verschieden sind;
- Anweisen einer Injektion eines OTDR-Testsignals durch den entsprechenden Laser (121; 221; 321; 421) in dem optischen Leitungsabschluss (101; 201; 301; 401), abgekürzt OLT, in den Testkanal;
- Erfassen von Reflexionen des OTDR-Testsignals an dem OLT (101; 201; 301; 401);
- Verschieben der ONTs (171, 175; 271, 275; 371, 375; 471, 475) zurück zu dem Testkanal oder zu einer optimaleren Kanalkonfiguration; und
- Verarbeiten der Reflexionen des OTDR-Testsignals, um die physische Beeinträchtigung zu erfassen.

## Revendications

1. Système de test de réflectométrie optique dans le domaine temporel, abrégé système de test OTDR, adapté pour détecter une déficience physique dans un réseau optique passif à multiplexage par répartition dans le temps, abrégé TWDM PON, ledit TWDM PON étant en utilisation opérationnelle par un fournisseur de services, ledit système de test OTDR comprenant un processeur (107 ; 207 ; 307 ; 407) configuré pour :
- évaluer le statut dudit TWDM PON ;
- sélectionner un canal de test parmi les canaux TWDM disponibles pour un test OTDR à l'aide d'un critère d'optimisation prenant en compte ledit état dudit TWDM PON et minimisant l'impact dudit test OTDR pour un ou plusieurs utilisateurs ;
- déplacer des terminaisons de réseau optique (171, 175 ; 271, 275 ; 371, 275 ; 471, 475), abrégées ONT, qui utilisent ledit canal de test vers un ou plusieurs canaux TWDM différents dudit canal de test ;
- commander l'injection d'un signal de test OTDR par le laser respectif (121 ; 221 ; 321 ; 421) dans la terminaison de ligne optique (101 ; 201 ; 301 ; 401), abrégée OLT, dans ledit canal de test ;
- capturer les réflexions dudit signal de test OTDR au niveau de ladite OLT (101 ; 201 ; 301 ; 401) ;
- déplacer lesdites ONT (171, 175 ; 271, 275 ; 371, 275 ; 471, 475) vers ledit canal de test ou vers une configuration de canal plus optimale ; et
- traiter lesdites réflexions dudit signal de test OTDR pour détecter ladite déficience physique.

2. Système de test OTDR selon la revendication 1, ledit processeur (107 ; 207 ; 307 ; 407) étant en outre configuré pour :
- ordonner à une ou plusieurs ONT dans ledit TWDM PON d'activer un réflecteur sur la longueur d'onde dudit canal de test.

3. Système de test OTDR selon la revendication 1, ledit état dudit TWDM PON comprenant un ou plusieurs parmi :
- l'accessibilité des ONT (171-176 ; 271-276 ; 371-376 ; 471-476) dans ledit TWDM PON ;
- un canal actuellement utilisé par les ONT (171-176 ; 271-276 ; 371-376 ; 471-476) dans ledit TWDM PON ;
- des canaux pris en charge par les ONT (171-176 ; 271-276 ; 371-376 ; 471-476) dans ledit TWDM PON ;
- une configuration de canal statique ou dynamique des ONT (171-176 ; 271-276 ; 371-376 ; 471-476) dans ledit TWDM PON ;
- la performance des ONT (171-176 ; 271-276 ; 371-376 ; 471-476) dans ledit TWDM PON ; et
- l'utilisation de la bande passante des ONT (171-176 ; 271-276 ; 371-376 ; 471-476) dans ledit TWDM PON.

4. Système de test OTDR selon la revendication 1, ledit critère d'optimisation pour sélectionner ledit canal de test comprenant un ou plusieurs parmi :
- un canal avec le moins de trafic réel ;
- un canal avec le moins de trafic historique ;
- un canal avec la moindre quantité d'ONT connectées ;
- un canal actuellement non utilisé par une ONT statique configurée ;
- un canal avec une violation minimale des accords de niveau de service des abonnés avec les utilisateurs de haut niveau.

5. Système de test OTDR selon la revendication 1, ledit processeur (107 ; 207 ; 307 ; 407) étant configuré pour déplacer lesdites ONT (171, 175 ; 271, 275 ; 371, 275 ; 471, 475) depuis ledit canal de test vers un ou plusieurs canaux TWDM différents dudit canal de test par accord en longueurs d'onde.

6. Système de test OTDR selon la revendication 1, ledit processeur (107 ; 207 ; 307 ; 407) étant configuré pour traiter lesdites réflexions dudit signal de test OTDR pour localiser ladite déficience physique.

7. Système de test OTDR selon la revendication 1, comprenant en outre dans ledit OLT (101) :
- un récepteur OTDR (123) configuré pour recevoir lesdites réflexions dudit signal de test OTDR sur la longueur d'onde dudit canal de test ; et
- un coupleur de prise de 10 % (125), situé entre ledit récepteur OTDR (123) et un multiplexeur de longueur d'onde de canal aval/amont (124), et adapté pour coupler 10 % desdites réflexions dudit signal de test OTDR sur la longueur d'onde dudit canal de test dans ledit récepteur OTDR (123).

8. Système de test OTDR selon la revendication 1, comprenant en outre dans ledit OLT (201) :
- un récepteur OTDR (223) configuré pour recevoir lesdites réflexions dudit signal de test OTDR sur la longueur d'onde dudit canal de test ;
- un coupleur (225) adapté pour rediriger une partie des signaux en amont ; et
- un démultiplexeur de longueur d'onde (224), situé entre ledit récepteur OTDR (223) et ledit coupleur (225), et adapté pour démultiplexer le signal en amont à la longueur d'onde amont régulière et le signal en amont à la longueur d'onde de test dudit canal de test, et adapté pour coupler ce dernier dans ledit récepteur OTDR (223).

9. Système de test OTDR selon la revendication 1, comprenant en outre dans ledit OLT (301) :
- un récepteur OTDR (323) configuré pour recevoir lesdites réflexions dudit signal de test OTDR sur la longueur d'onde dudit canal de test ; et
- un commutateur optique rapide (325) adapté pour commuter à la milliseconde entre une première position, dans laquelle une salve dudit signal de test OTDR est passée en direction aval dans ledit TWDM PON, et une seconde position, dans laquelle des réflexions de ladite salve dudit signal de test OTDR sont couplées dans ledit récepteur OTDR (323).

10. Système de test OTDR selon la revendication 1, comprenant en outre dans ledit OLT (401) :
- un récepteur OTDR (423) configuré pour recevoir lesdites réflexions dudit signal de test OTDR sur la longueur d'onde dudit canal de test ;
- un coupleur (426) adapté pour rediriger une partie des signaux en amont ; et
- des commutateurs optiques lents (424, 425) situés et adaptés pour commuter entre une première position, dans laquelle des signaux de données court-circuitent ledit coupleur (426) pendant le fonctionnement normal, et une seconde position, dans laquelle ledit signal de test OTDR est passé à travers ledit coupleur (426) en direction aval et ledit récepteur OTDR (423) est couplé audit coupleur (426) pour recevoir des réflexions dudit signal de test OTDR pendant ledit test.

11. Procédé de test de réflectométrie optique dans le domaine temporel, abrégé procédé de test OTDR, détectant une déficience physique dans un réseau optique passif à multiplexage par répartition dans le temps, abrégé TWDM PON, ledit TWDM PON étant en utilisation opérationnelle par un fournisseur de services, ledit procédé de test OTDR comprenant :
- l'évaluation du statut dudit TWDM PON ;
- la sélection d'un canal de test parmi les canaux TWDM disponibles pour un test OTDR au moyen d'un critère d'optimisation prenant en compte ledit statut dudit TWDM PON et minimisant l'impact dudit test OTDR pour un ou plusieurs utilisateurs ;
- le déplacement de terminaisons de réseau optique (171, 175, 271, 275 ; 371, 375 ; 471, 475), abrégées ONT, qui utilisent ledit canal de test vers un ou plusieurs canaux TWDM différents dudit canal de test ;
- l'instruction d'injecter un signal de test OTDR par le laser respectif (121 ; 221 ; 321 ; 421) dans la terminaison de ligne optique (101 ; 201 ; 301 ; 401), abrégée OLT, dans ledit canal de test ;
- la capture de réflexions dudit signal de test OTDR au niveau dudit OLT (101 ; 201 ; 301 ; 401) ;
- le déplacement desdites ONT (171, 175, 271, 275 ; 371, 375 ; 471, 475) vers ledit canal de test ou vers une configuration de canal plus optimale ; et
- le traitement desdites réflexions dudit signal de test OTDR pour détecter ladite déficience physique.
